## Europäisches Patentamt
## European Patent Office
## Office européen des brevets

(19)

(11) Veröffentlichungsnummer : **0 133 292**
**B1**

(12)   **EUROPÄISCHE PATENTSCHRIFT**

(45) Veröffentlichungstag der Patentschrift :
27.05.87

(21) Anmeldenummer : 84108850.3

(22) Anmeldetag : 26.07.84

(51) Int. Cl.⁴ : **G 01 F 11/04**, G 01 F 11/06,
G 05 D 11/035

(54) **Dosiergerät zum Dosieren einer Hauptmasse und mindestens eines Zuschlagstoffes, insbesondere zum Dosieren hochviskoser Massen.**

(30) Priorität : 29.07.83 DE 3327420

(43) Veröffentlichungstag der Anmeldung :
20.02.85 Patentblatt 85/08

(45) Bekanntmachung des Hinweises auf die Patenterteilung : 27.05.87 Patentblatt 87/22

(84) Benannte Vertragsstaaten :
AT BE CH DE FR GB IT LI NL

(56) Entgegenhaltungen :
CH-A-   618 787
DE-A- 2 423 727
DE-A- 3 023 003
US-A- 4 228 924
US-A- 4 273 261
US-A- 4 366 918

(73) Patentinhaber : Ludwig Schwerdtel GmbH.
Boschstrasse 8
D-8047 Karlsfeld (DE)

(72) Erfinder : Lang, Hans–Jörg
Oberfeldring 9
D-8065 Eisenhofen (DE)

(74) Vertreter : Rau, Manfred, Dr. Dipl.-Ing. et al
Rau & Schneck, Patentanwälte Königstrasse 2
D-8500 Nürnberg 1 (DE)

## Beschreibung

Die Erfindung betrifft ein Dosiergerät nach dem Oberbegriff des Anspruches 1. Ein derartiges Dosiergerät ist durch Benutzung bekanntgeworden.

Üblicherweise werden hochviskose Massen, wie z. B. Silikonkautschuk als Grundstoff für Dichtungsmassen mit in entsprechender Menge dosierten Zuschlagstoffen, beispielsweise Pigmenten, in großen Mischern gemischt und anschließend auf Abfüllanlagen in Kartuschen abgefüllt. Der erforderliche Mischaufwand ist hierbei beträchtlich. Änderungen in der Art und-/oder Menge der zugesetzten Zuschlagstoffe führen insbesondere dann, wenn es sich hierbei um Pigmente handelt, zu erheblichem Reinigungsaufwand.

Aus der DE-A-30 23 003 ist ein Dosiergerät für hochviskose Massen bekannt, das zwar bereits zu einer exakten Dosierung solcher Massen führt, das aber nicht das Zusammenführen mehrerer Stoffe in jeweils gleichbleibendem Mengenverhältnis ermöglicht.

Aus der CH-A-618 787 ist ein Dosiergerät für miteinander zu mischende Flüssigkeiten bekannt, das zwei Dosierzylinder für zwei Flüssigkeiten aufweist. Die Dosierzylinder sind parallel zueinander angeordnet. In ihnen enthaltene Dosierkolben sind mit einstellbarem Hub antreibbar.

Aus der US-A-4 273 261 ist ein Dosiergerät mit mehreren parallel zueinander angeordneten Dosierzylindern bekannt, in denen Dosierkolben verschiebbar angeordnet sind. Diese sind verstellbar an einem Rahmen angebracht.

Aus der US-A-4 228 924 ist ein Dosiergerät bekannt, das parallel zueinander angeordnet nichtauswechselbare Dosierzylinder zeigt, in denen Dosierkolben angeordnet sind. Diese Kolben sind mit einem antreibbaren Rahmen gekoppelt, wobei die Verbindung teilweise nicht fest ist.

Der Erfindung liegt die Aufgabe zugrunde, ein Dosiergerät zu schaffen, mittels dessen eine Hauptmasse und mindestens ein Zuschlagstoff in über der Zeit jeweils konstantem Volumenverhältnis zueinander dosiert werden, wobei Änderungen des Volumenverhältnisses in einfacher Weise möglich sein sollen.

Diese Aufgabe wird bei einem Dosiergerät der gattungsgemäßen Art durch die Merkmale des Kennzeichnungsteiles des Anspruches 1 gelöst. Die Anordnung der Dosierzylinder und der völlig identische Hub bewirken, daß jeweils über einen Hub, und zwar unabhängig von der Hubgeschwindigkeit und der Konstanz der Hubbewegung jeweils identische Volumina zusammengemischt werden. Dies ermöglicht es, Hauptmasse und den oder die Zuschlagstoffe lediglich in einem quasi-kontinuierlich arbeitenden Durchlaufmischer zu mischen und direkt einer Kartuschen-Abfüllanlage zuzuführen, wobei jeweils die Summe der Hauptmasse und des oder der Zuschlagstoffe eines Hubes oder eines ganzzahligen Vielfachen eines Hubes in eine Kartusche gefüllt werden. Weiterhin ist eine Änderung der Volumenverhältnisse in einfacher Weise möglich, da hierzu nur der Plunger und die diesen aufnehmende Führungsbüchse ausgetauscht werden müssen.

Die Maßnahmen nach Anspruch 2 ermöglichen es, in sehr einfacher Weise auch einen Wechsel in der Art des Zuschlagstoffes, beispielsweise einen Pigmentwechsel vorzunehmen. Selbstverständlich können auch die Maßnahmen nach Anspruch 2 eingesetzt werden, um lediglich Änderungen der Volumenverhältnisse durchzuführen. In diesem Fall wird dann die gesamte Baueinheit ausgewechselt und an dieser dann der Plunger mit Führungsbüchse ausgetauscht.

Der absolut parallele Antrieb der Dosierkolben wird durch die Maßnahmen nach Anspruch 3 in einfacher Weise erreicht. Wenn die bei hochviskosen Massen ohnehin zweckmäßige oder sogar notwendige Druckförderung der Hauptmasse und des oder der Zuschlagstoffe in die Dosierzylinder durchgeführt wird, dann kann durch die Maßnahmen nach Anspruch 4 die Auswechselbarkeit des Plunger des mindestens einen Dosierzylinders für Zuschlagstoff noch weiter vereinfacht werden.

Anspruch 5 gibt eine einfache Ausgestaltung für die schnelle Auswechselbarkeit des mindestens einen Dosierzylinders für Zuschlagstoff an.

Die Maßnahmen nach Anspruch 6 geben eine einfache Ausgestaltung mindestens eines Dosierzylinders wieder, der als geschlossene Einheit auswechselbar sein soll, und der möglichst wenig Aufwand beim Reinigen erfordert. Durch diese Art der Anordnung der Dichtung werden die zu reinigenden Bereiche reduziert.

Durch die Maßnahmen nach Anspruch 7 wird sichergestellt, daß das Drehküken trotz der einseitigen Druckbelastung leicht betätigbar ist.

Anspruch 8 gibt eine weitere Maßnahme an, die das schnelle Auswechseln des mindestens einen Dosierzylinders für einen Zuschlagstoff erleichtert.

Das erfindungsgemäße Dosiergerät ist bevorzugt einsetzbar für eine dosierte Zusammenführung von transparentem Silikonkautschuk als Hauptmasse und mindestens einem Pigment als Zuschlagstoff. Auf einer Anlage kann dann ständig die gleiche Hauptmasse, nämlich der transparente Silikonkautschuk gefahren werden ; es ist lediglich ein Wechsel bei den Pigmenten notwendig, die nur zu geringen sehr einfachen technischen Umbauten führen. Das Dosiergerät ist selbstverständlich aber auch für andere Hauptmassen und Zuschlagstoffe einsetzbar, wenn vergleichbare Probleme auftauchen, wie z. B. auch in der Lebensmitteltechnik.

Weitere Vorteile und Merkmale der Erfindung ergeben sich aus der Beschreibung eines Ausführungsbeispiels anhand der Zeichnung. Es zeigt

Figur 1 eine Vorderansicht auf ein teilweise geschnitten dargestelltes Dosiergerät nach der Erfindung,

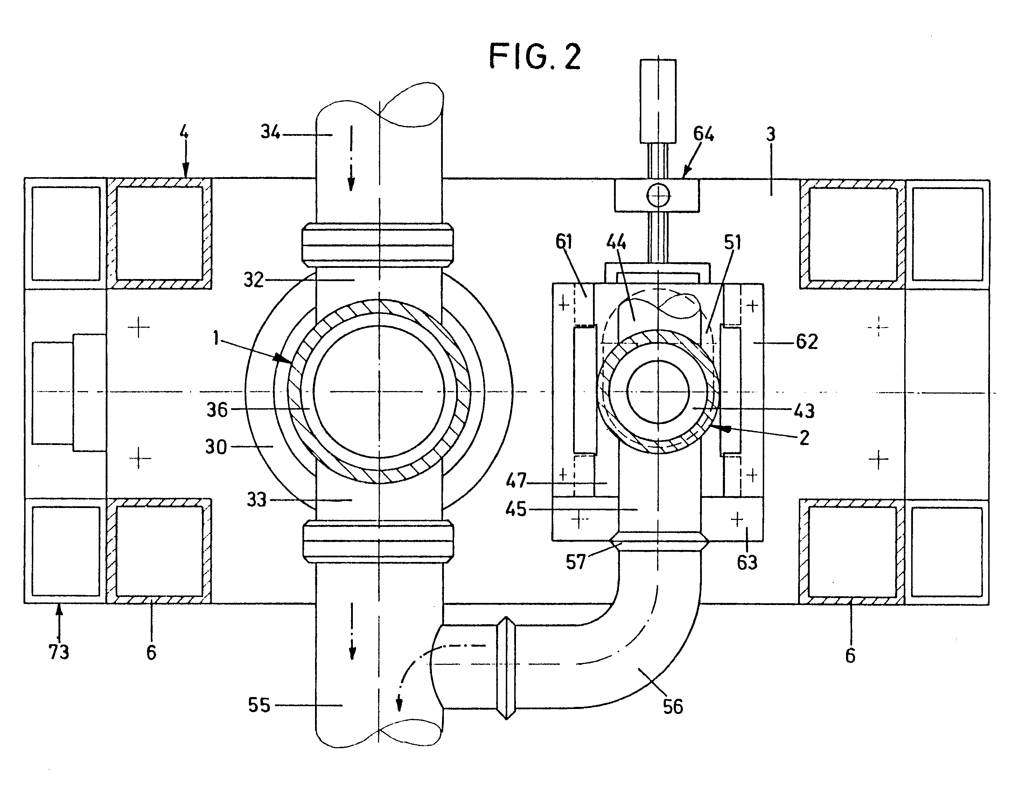

Figur 2 einen Schnitt gemäß der Schnittlinie II-II in Fig. 1 in vergrößertem Maßstab und

Figur 3 einen Dosierzylinder für Zuschlagstoff in gegenüber Fig. 1 stark vergrößerter und um 90° gedrehter Darstellung.

Das in der Zeichnung dargestellte Dosiergerät weist einen Dosierzylinder 1 für eine Hauptmasse, beispielsweise transparenten Silikon-Kautschuk, und einen weiteren Dosierzylinder 2 für einen Zuschlagstoff, beispielsweise Pigmente, auf. Selbstverständlich kann die Zahl der Dosierzylinder, und zwar insbesondere der Dosierzylinder für Zuschlagstoffe, beliebig vergrößert werden. Die Dosierzylinder 1, 2 sind auf einer Grundplatte 3 eines Rahmens 4 angebracht. Der Rahmen 4 weist eine zur Grundplatte 3 parallele obere Stützplatte 5 nach Art eines Querhauptes und vier jeweils an den Ecken der rechteckigen Platten 3, 5 angeordnete parallel zueinander verlaufende Stützen 6 auf. Der gesamte Rahmen 4 ist damit quaderförmig ausgebildet. Die Dosierzylinder 1, 2 verlaufen parallel zu den Stützen 6.

An der oberen Stützplatte 5 ist ein hydraulischer Arbeitszylinder 7 als Linearantrieb für die Dosierzylinder 1, 2 angebracht. Die Kolbenstange 8 des hydraulischen Arbeitszylinder 7 greift an einem Querbalken 9 an, von dem aus der Antrieb der Dosierzylinder 1, 2 erfolgt. Der Abstand der Mittellinie 10 des hydraulischen Arbeitszylinders 7 von der Mittellinie 11 des Dosierzylinders 1 einerseits und der Mittellinie 12 des Dosierzylinders 2 andererseits entspricht etwa dem noch zu schildernden Übersetzungsverhältnis beider Dosierzylinder 1, 2 zueinander, so daß der Querbalken 9 beim Antrieb in etwa drehmomentenfrei ist. Zusätzlich ist der Querbalken 9 noch mittels einer Führungsstange 13 vertikal geführt, die in einem Führungsschlitz 14 in einem Führungsflansch 15 an der Unterseite des hydraulischen Arbeitszylinders 7 eingreift. Die Führungsstange 13 ist durch eine Freibohrung 16 in der Stützplatte 5 hindurchgeführt.

Im Dosierzylinder 1 ist ein Dosierkolben 17 längs der Mittellinie 11 verschiebbar angeordnet, der mittels einer Dichtung 18 gegenüber der Innenwand 19 des Dosierzylinders 1 abgedichtet ist. Am Dosierkolben 17 ist eine nach oben zum Querbalken 9 ragende, zur Mittellinie 11 koaxiale Kolbenstange 20 angebracht, die frei gegen ein Drucklager 21 am Querbalken 9 anliegt. Kolbenstange 20 und Drucklager 21 sind also nicht miteinander verbunden, d. h. der Dosierkolben 17 ist schwimmend im Dosierzylinder 1 angeordnet.

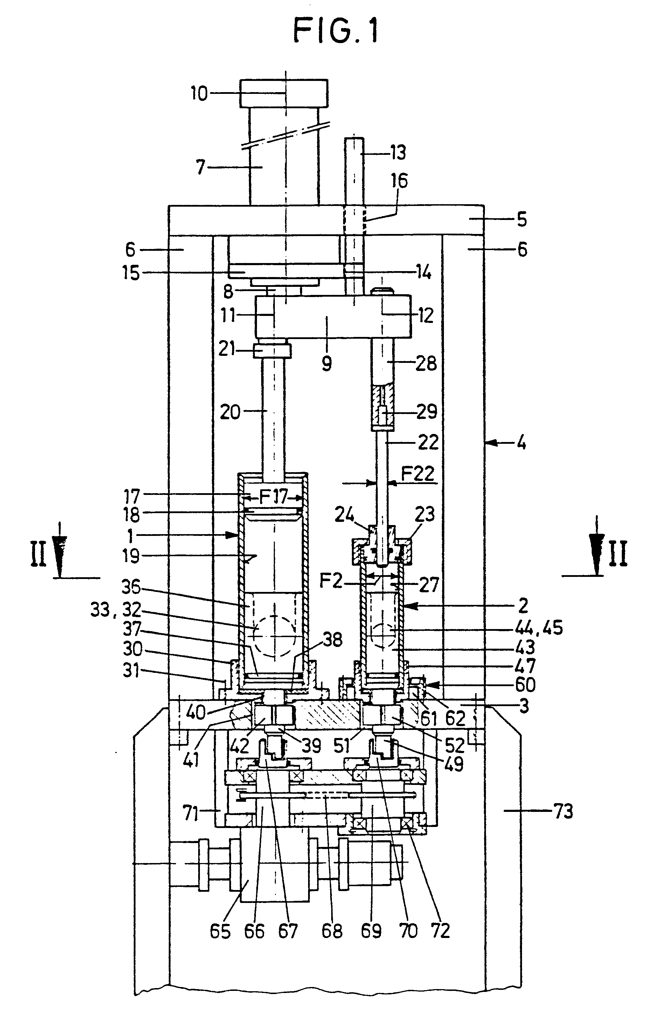

Beim Dosierzylinder 2 für einen Zuschlagstoff dient ein Plunger 22, also ein sogenannter Tauchkolben, als Dosierkolben. Der Durchmesser dieses zylinderstabförmigen Plungers 22 ist — wie Fig. 1 erkennen läßt — erheblich geringer als der Durchmesser des Dosierzylinders 2. Der Plunger 22 ist in einer am oberen Ende des Dosierzylinders 2 mittels einer Überwurfmutter 23 befestigten Führungsbüchse 24 koaxial zur Mittellinie 12 geführt. In der Führungsbüchse 24 ist auch eine gegen den Plunger 22 anliegende Dichtung 25 angeordnet. Gleichermaßen ist die Führungsbüchse 24 mittels einer Dichtung 26 gegenüber der Innenwand 27 des Dosierzylinders 2 abgedichtet. Der Plunger 22 liegt frei gegen eine als Drucklager dienende, koaxial zur Mittellinie 12 am Querbalken 9 angebrachte Druckstange 28 an, in der ein Endschalter 29 angeordnet ist, mittels dessen erfaßt wird, ob der Plunger 22 an der Druckstange 28 anliegt oder nicht. Ein gleichartiger nicht dargestellter Schalter ist vorgesehen, um das Anliegen der Kolbenstange 20 des Dosierkolbens 17 am Drucklager 21 zu erfassen.

Der Dosierzylinder 1 ist in eine topfförmige Haltebüchse 30 geschraubt, die auf der Grundplatte 3 mittels Schrauben befestigt ist, von denen nur jeweils die Mittellinie 31 gezeichnet ist. In den Dosierzylinder 1 mündet ein Zuführstutzen 32 für zu dosierende Hauptmasse ein und — um 180° versetzt hierzu — ein Auslaßstutzen 33 für dosierte Hauptmasse aus. Zuführstutzen 32 und Auslaßstutzen 33 sind in einer gemeinsamen horizontalen, senkrecht zu den Stützen 6 verlaufenden Ebene angeordnet. An den Zuführstutzen 32 ist eine Zuführleitung 34 angeordnet, durch die die zu dosierende Hauptmasse dem Dosierzylinder 1 unter Druck zugeführt wird, wodurch auch der Dosierkolben 17 angehoben wird. Der Dosierzylinder 1 wird also unter Druck gefüllt. In dem Dosierzylinder 1 ist ein sogenanntes Drehküken 36 angeordnet, das in der Grundform zylindrisch ausgebildet ist und an der Innenwand 19 des Dosierzylinders 1 anliegt und derart ausgeschnitten ist, daß es durch entsprechende Drehung jeweils um 180° entweder den als Einlaß dienenden Zuführstutzen 32 oder als Auslaß dienenden Auslaßstutzen 33 freigibt bzw. wechselweise verschließt. Der genaue Aufbau wird noch im Zusammenhang mit dem Dosierzylinder 2 beschrieben. Dieses Drehküken 36 ist in seinem unteren Bereich mittels einer Dichtung 37 gegen die Innenwand 19 des Dosierzylinders 1 abgedichtet. Es ist weiterhin auf einer stirnseitig angeordneten, auf der topfförmigen Haltebüchse 30 abgestützten Gleitscheibe 38 aus einem geeigneten Kunststoff, beispielsweise Polytetrafluoräthylen, abgestützt.

Das Drehküken 36 ist mit einem koaxial zur Mittellinie 11 verlaufenden Antriebs-Zapfen 39 versehen, der durch eine Öffnung 40 in der Haltebüchse 30 und eine entsprechende Bohrung 41 in der Grundplatte 3 nach unten aus dem Rahmen 4 herausgeführt ist. Das Drehküken 36 ist axial mittels eines geteilten Klemmrings 42 festgelegt, der gegen die Unterseite der topfartigen Haltebüchse 30 anliegt.

In den Dosierzylinder 2 mündet ebenfalls ein Zuführstutzen 44 ein und — 180° gegenüber diesem versetzt — ein Auslaßstutzen 45 aus. Beide liegen in einer Ebene mit dem Zuführstutzen 32 und dem Auslaßstutzen 33. Ebenfalls unterhalb des Zuführstutzens 44 und des Auslaßstutzens 45 ist das Drehküken 43 mittels einer Dichtung 46 gegenüber der Innenwand 27 des Dosierzylinders 2 abgedichtet. Der Dosierzylinder 2 ist in eine ebenfalls topfartige Haltebüchse 47 eingeschraubt, die aber in anderer noch zu beschreibender Weise mit der Grundplatte 3 verbunden ist. Das Drehküken 43 ist stirnseitig auf einer mit der Gleitscheibe 38 gleichartig ausgebildeten Gleitscheibe 48 abgestützt. Koaxial zur Mittellinie 12 ist an dem Drehküken 43 ein Antriebs-Zapfen 49 angebracht, der eine Öffnung 50 in der Haltebüchse 47 und ein Langloch 51 in der Grundplatte 3 nach unten durchsetzt. Auch hier ist das Drehküken 43 mittels eines geteilten Klemmrings 52 axial festgelegt.

An den Zuführstutzen 44 ist eine Zuführleitung anschließbar, in die eine Pumpe geschaltet ist, so daß auch hier die zu dosierenden Zuschlagstoffe dem Dosierzylinder 2 unter Druck zugeführt werden, wodurch der Plunger 22 aus dem Dosierzylinder 1 heraus gegen die Druckstange 28 geschoben wird.

An den Auslaßstutzen 33 des Dosierzylinders 1 ist eine Hauptabführleitung 55 angeschlossen, in die eine Abführleitung 56 einmündet, die mittels einer schnell lösbaren Rohrkupplung 57 mit dem Auslaßstutzen 45 des Dosierzylinders 2 verbunden ist. Hauptmasse und Zuschlagstoff werden völlig gleichmäßig zusammengeführt und brauchen also nur noch längs ihres Weges durch die Hauptabführleitung 55 durchmischt werden, was beispielsweise durch entsprechende Einbauten erfolgen kann, die nicht Teil dieser Erfindung sind. Der Hauptabführleitung kann dann direkt eine Kartuschenabfüllmaschine nachgeschaltet werden, wobei jeweils ein Hub des Dosiergerätes einer Kartuschenfüllung entspricht.

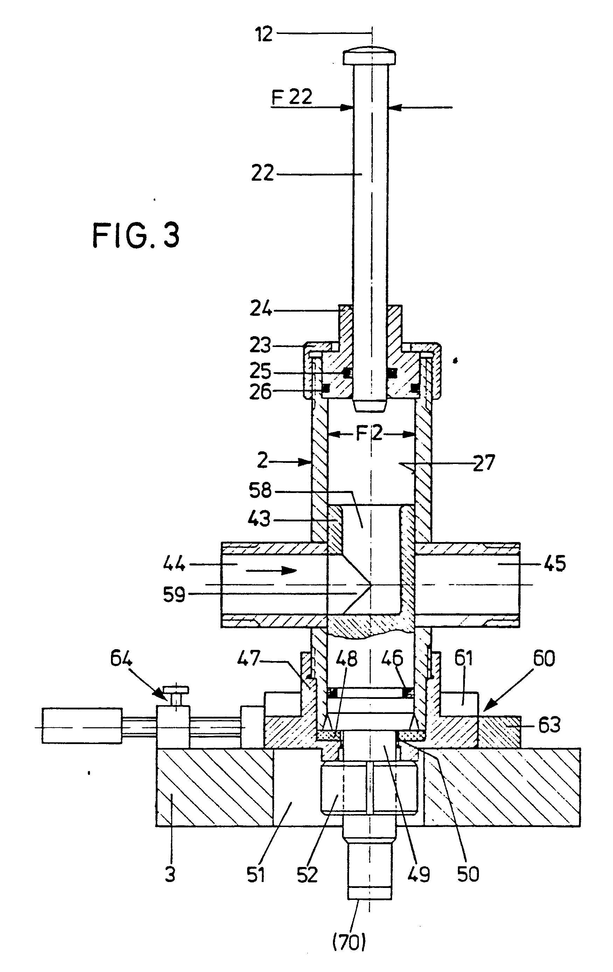

Wie aus Fig. 3 hervorgeht, besteht das Drehküken 43 aus einem massiv zylindrischen Teil, der Zuführstutzen 44 und Auslaßstutzen 45 nach oben deutlich überragt und rundum dicht geführt aber drehbar an der Innenwand 27 des Dosierzylinders 2 anliegt. Koaxial zur Mittellinie 12 ist von oben her in das Drehküken 43 eine als Axialkanal 58 dienende Sackbohrung eingebracht, die etwa bis zur unteren Begrenzung des Zuführstutzens 44 bzw. Auslaßstutzens 45 verläuft. Aus diesem Axialkanal 58 mündet nach nur einer Seite ein Radialkanal 59, der ebenfalls durch eine entsprechende Bohrung gebildet ist, aus. Je nachdem, ob der Radialkanal 59 durch entsprechende Drehung des Drehkükens 43 vor dem Zuführstutzen 44 oder dem Auslaßstutzen 45 liegt, ist einer dieser beiden Stutzen 44 bzw. 45 mit dem oberen Innenraum des Dosierzylinders 2 verbunden, in den der Plunger 22 eintaucht. Der Durchmesser des Axialkanals 58 ist so groß, daß der Plunger 22 auch in diesen eintauchen kann. Das Drehküken 36 des Dosierzylinders 1 ist in gleicher Weise aufgebaut, wobei dort allerdings der Dosierkolben 17 naturgemäß nicht in den Axialkanal des Drehkükens 36 eintauchen kann, was auch nicht notwendig ist, da der Dosierzylinder 1 ohnehin länger ausgebildet ist als der Dosierzylinder 2.

Der Dosierzylinder 2 ist mit der Grundplatte 3 mittels einer Schiebeverbindung 60 verbunden, die ein sehr schnelles Auswechseln des Dosierzylinders 2 samt Plunger 22 ermöglicht. Hierzu sind an der Haltebüchse 47 leistenartige Vorsprünge 61 angebracht, die auf zwei Seiten parallel zueinander, und zwar parallel zum Zuführstutzen und zum Auslaßstutzen 45 angeordnet sind. An der Grundplatte 3 sind winkelförmige Halteleisten 62 angebracht, die die Vorsprünge 61 übergreifen. Das in der Grundplatte 3 ausgebildete Langloch 51 erstreckt sich zur Seite des Zuführstutzens 44 hin. Die Montage des Dosierzylinders 2 erfolgt in der Weise, daß dieser in einer gegenüber der Mittellinie 12 zur Seite des Zuführstutzens 44 hin versetzten Stellung auf die Grundplatte aufgesetzt wird, wobei der Antriebs-Zapfen 49 das Langloch 51 in der Grundplatte 3 nach unten durchsetzt. Anschließend wird der Dosierzylinder 2 in seine durch die Mittellinie 12 vorgegebene Stellung verschoben, wobei die Vorsprünge 61 unter die Halteleisten 62 greifen, wodurch der Dosierzylinder 2 axial festgelegt wird. Seine mit der Mittellinie 12 fluchtende Lage wird dadurch erreicht, daß er bis gegen eine auf der Seite des Auslaßstutzens 45 liegende Anschlag-Leiste 63 geschoben wird, die an der Grundplatte 3 angebracht ist. Von der anderen Seite wird der Dosierzylinder 2 dann mittels eines handelsüblichen Schnellverschlusses 64 festgelegt. Anschliessend kann die Rohrkupplung 57 zwischen der Abführleitung 56 und dem Auslaßstutzen 45 geschlossen werden. Die Demontage erfolgt in umgekehrter Reihenfolge.

Zum Drehantrieb der Drehküken 36, 43 zwischen zwei um 180° gegeneinander versetzten Endlagen erfolgt über einen handelsüblichen hydraulischen Drehantrieb 65, dessen Abtriebswelle 66 mittels einer Steckkupplung 67 mit dem Antriebs-Zapfen 39 des Dosierzylinders 1 verbunden ist. Antriebs-Zapfen 39 und Abtriebswelle 66 sind hierzu komplementär ausgebildet.

Mittels eines Ketten- oder Zahnriemen-Triebes 68 ist eine Zwischenwelle 69 mit der Abtriebswelle 66 gekoppelt, und wird von dieser im gleichen Drehsinn und jeweils im gleichen Drehwinkel von 180° angetrieben. Diese Zwischenwelle 69 ist fluchtend mit der Mittellinie 12 angeordnet und greift mittels einer Steckkupplung 70 in den Antriebs-Zapfen 49 des Drehkükens 43. Die Steckkupplung 70 ist so ausgebildet, daß die Verbindung in einer der beiden Endlagen des Drehkükens 43 durch Verschieben des Dosierzylinders 2 in der geschilderten Weise hergestellt bzw. gelöst wird.

An der Unterseite der Grundplatte 3 ist ein Lagerträger 71 ausgebildet, in dem die Abtriebswelle 66 und die Zwischenwelle 69 jeweils mittels Kugellagern 72 gelagert sind. Außerdem ist der hydraulische Drehantrieb 65 an diesem Lagerträger 71 angebracht.

Der Rahmen 4 kann aufgehängt sein oder aber über ein Grundgestell 73 gegenüber dem Boden abgestützt sein.

Wegen der absoluten Parallelverschiebung des Querbalkens 9 werden der Dosierkolben 17 einerseits und der Plunger 22 andererseits jeweils mit absolut identischem Hub angetrieben. Das Verhältnis der vom Dosierzylinder 1 einerseits und vom Dosierzylinder 2 andererseits während eines Hubes geförderten Hauptmasse einerseits und Zuschlagstoff andererseits hängt also nur vom die Förderung bewirkenden Querschnitt F17 des Dosierkolbens 17 zum Querschnitt F22 des Plungers 22 ab. Um dieses Volumenverhältnis zu ändern, bedarf es also nur des Austausches des Plungers 22 mit Führungsbüchse 24 gegen einen Plunger 22 mit anderem Durchmesser. Da der Querschnitt F2 des Dosierzylinders 2 auf jeden Fall erheblich größer ist als der Querschnitt F22 des Plungers 22 — das Querschnittsverhältnis beträgt beispielsweise 4 bis 10 — kann das Volumenverhältnis von Hauptmasse und Zuschlagstoff in sehr weiten Bereichen verändert werden.

Da das Füllen der Dosierzylinder 1, 2 bei entsprechender Stellung der Drehküken 36, 43 mittels Pumpen unter Druck erfolgt, erfolgt nur das dosierte Ausschieben von Hauptmasse und Zuschlagstoff unter Einsatz des hydraulischen Arbeitszylinders 7 mittels des Dosierkolbens 17 bzw. des Plungers 22.

An sich findet in dem beschriebenen Dosiergerät eine reine Volumendosierung statt ; da in der Regel aber inkompressible oder weitgehend inkompressible Hauptmassen und Zuschlagstoffe dosiert werden, erfolgt somit gleichzeitig auch die Dosierung in einem festen vorgegebenen Mengenverhältnis.

**Patentansprüche**

1. Dosiergerät mit einem Dosierzylinder (1) für eine Hauptmasse und mit mindestens einem Dosierzylinder (2) für einen in einem vorbestimmbaren Volumenverhältnis zur Hauptmasse zu dosierenden Zuschlagstoff, insbesondere zum Dosieren hochviskoser Massen, wobei in jedem Dosierzylinder (1, 2) ein von einem gemeinsamen Antrieb antreibbarer Dosierkolben (17, 22) vorgesehen ist, wobei der Antrieb (7) und die Dosierkolben (17) an einem gemeinsamen Rahmen (4) angeordnet sind, und wobei in die Dosierzylinder (1, 2) jeweils ein Zuführstutzen (32, 44) einmündet und ein Auslaßstutzen (33, 45) ausmündet, von denen jeweils einer mittels eines Zweiwegeventils verschlossen bzw. geöffnet werden kann, dadurch gekennzeichnet, daß die Dosierzylinder (1, 2) parallel zueinander angeordnet und ihre Dosierkolben (17, 22) mit identischem Hub antreibbar sind, daß der Dosierkolben des mindestens einen Dosierzylinders (2) für Zuschlagstoff als Plunger (22) mit geringerem Querschnitt (F22) als der Querchnitt (F2) des Dosierzylinders (2) für Zuschlagstoff ausgebildet ist und daß der Plunger (22) in einer auswechselbaren Führungsbüchse (24) des Dosierzylinders (2) für Zuschlagstoff abgedichtet geführt ist.

2. Dosiergerät nach Anspruch 1, dadurch gekennzeichnet, daß der mindestens eine Dosierzylinder (2) für Zuschlagstoff als Baueinheit mit dem Rahmen (4) auswechselbar verbunden ist.

3. Dosiergerät nach Anspruch 1, dadurch gekennzeichnet, daß der Dosierkolben (17) und der mindestens eine Plunger (22) gegen einen vom gemeinsamen Antrieb parallel zu sich selbst längs der Mittellinien von Dosierkolben (17) und Plunger (22) verschiebbaren Querbalken (9) anliegen.

4. Dosiergerät nach Anspruch 3, mit einer Druckförderung von Hauptmasse und Zuschlagstoff in die Dosierzylinder, dadurch gekennzeichnet, daß mindestens der mindest eine Plunger (22) nicht mit dem Querbalken (9) verbunden ist.

5. Dosiergerät nach Anspruch 2, dadurch gekennzeichnet, daß der mindestens eine Dosierzylinder (2) für Zuschlagstoff mittels einer Schnellkupplung mit dem Rahmen (4) verbunden ist.

6. Dosiergerät nach Anspruch 2, dadurch gekennzeichnet, daß das jeweilige Zweiwegeventil als Drehküken (36, 43) ausgebildet ist, das auf der dem jeweiligen Dosierkolben (17, 22) abgewandten Seite von Zuführstutzen (32, 44) und Auslaßstutzen (33, 45) gegenüber der Innenwand (19, 27) des jeweiligen Dosierzylinders (1, 2) abgedichtet ist.

7. Dosiergerät nach Anspruch 6, dadurch gekennzeichnet, daß das Drehküken (36, 43) stirnseitig auf einer Gleitscheibe (38, 48) abgestützt ist.

8. Dosiergerät nach Ansprüchen 2 und 6, dadurch gekennzeichnet, daß mindestens das Drehküken (43) des mindestens einen Dosierzylinders (2) für Zuschlagstoff mittels einer lösbaren Kupplung, insbesondere einer Steckkupplung (70) mit einem Drehantrieb (65) verbunden ist.

9. Dosiergerät nach Anspruch 3, dadurch gekennzeichnet, daß der gemeinsame Antrieb durch einen hydraulischen Arbeitszylinder (7) gebildet ist.

**Claims**

1. Measuring device with a dispensing cylinder (1) for measuring out a main composition and with at least one dispensing cylinder (2) for an additive which is to be measured out in a predeterminable volumetric ratio to the main composition and in particular for measuring out highly viscous compositions, there being in each dispensing cylinder (1, 2) a dispensing piston (17, 22) adapted to be driven by a common drive, the drive (7) and the dispensing pistons (17) being disposed on a common frame (4), a feed nozzle (32, 44) discharging into each of the dispensing cylinders (1, 2), each of the latter comprising an outlet (33, 34) of which in each case one can be respectively closed or opened by means of a two-way valve, characterised in that the dispensing cylinders (1, 2) are parallel with each other, their dispensing pistons (17, 22) being adapted to be driven with an identical stroke, and in that the dispensing piston of at least one dispensing cylinder (2) for additive being constructed as a plunger (22) of smaller cross-section (F22) than the cross-section (F2) of the dispensing cylinder (2) for additive, and in that the plunger (22) is guided in sealing type fashion in an interchangeable guide bush (24) in the dispensing cylinder (2).

2. Measuring device according to Claim 1, characterised in that at least one dispensing cylinder (2) for additive is interchangeably connected to the frame (4) as one component unit.

3. Measuring device according to Claim 1, characterised in that the dispensing piston (17) and at least one plunger (22) bear against a cross bar (9) displaceable by a common drive parallel with itself and along the median lines of dispensing piston (17) and plunger (22).

4. Measuring device according to Claim 3, with pressure feed of main composition and additive into the dispensing cylinders, characterised in that at least the or least one plunger (22) is not connected to the cross bar (9).

5. Measuring device according to Claim 2, characterised in that at least one dispensing cylinder (2) for additive is connected to the frame (4) by a rapid-action coupling.

6. Measuring device according to Claim 2, characterised in that the relevant two-way valve is constructed as a rotary plug (36, 43) which, on the side remote from the relevant dispensing piston (17, 22) is sealed in respect of the inner wall (19, 27) of the relevant dispensing cylinder (1, 2) by feed nozzle (32, 44) and outlet nozzle (33, 45).

7. Measuring device according to Claim 6, characterised in that the rotary plug (34, 43) has its end face braced on a sliding disc (38, 48).

8. Measuring device according to Claims 2 and 6, characterised in that at least the rotary plug (43) of at least one dispensing cylinder (2) for additive is connected by a separable coupling, particularly a push-in coupling (70), to a rotary drive (65).

9. Measuring device according to Claim 3, characterised in that the common drive consists of a hydraulic working cylinder (7).

**Revendications**

1. Appareil de dosage comprenant un cylindre doseur (1) pour une masse principale et au moins un cylindre doseur (2) pour une matière supplémentaire devant être dosée selon un rapport volumétrique prédéterminable vis-à-vis de la masse principale, notamment pour doser des masses à haute viscosité, un piston doseur (17, 22) pouvant être entraîné par un entraînement commun étant prévu dans chaque cylindre doseur (1, 2), l'entraînement (7) et les pistons doseurs (17) étant disposés dans un châssis commun (4), un raccord d'admission (32, 44) et un raccord de sortie (33, 45) débouchant dans les cylindres doseurs (1, 2) et partant de ces cylindres, respectivement, raccords dont l'un considéré peut être respectivement fermé ou ouvert au moyen d'une valve à deux voies, caractérisé par le fait que les cylindres doseurs (1, 2) sont agencés parallèlement l'un à l'autre et leurs pistons doseurs (17, 22) peuvent être entraînés avec une course identique ; par le fait que le piston doseur du cylindre doseur (2) prévu au minimum pour la matière supplémentaire est réalisé sous la forme d'un plongeur (22) accusant une section (F22) plus faible que la section (F2) du cylindre doseur (2) pour la matière supplémentaire ; et par le fait que le plongeur (22) est guidé, de manière étanche, dans une douille de guidage interchangeable (24) du cylindre doseur (2) pour la matière supplémentaire.

2. Appareil de dosage selon la revendication 1, caractérisé par le fait que le cylindre doseur (2) prévu au minimum pour la matière supplémentaire est relié au châssis (4) avec faculté de remplacement, en tant qu'unité constitutive.

3. Appareil de dosage selon la revendication 1, caractérisé par le fait que le piston doseur (17) et le plongeur (22) prévu au minimum portent contre une entretoise (9) à laquelle l'entraînement commun peut imprimer un coulissement parallèlement à elle-même, le long des lignes passant par les centres du piston doseur (17) et du plongeur (22).

4. Appareil de dosage selon la revendication 3, dans lequel la masse principale et la matière supplémentaire sont refoulées sous pression dans les cylindres doseurs, caractérisé par le fait qu'au moins le plongeur (22) prévu au minimum n'est pas relié à l'entretoise (9).

5. Appareil de dosage selon la revendication 2, caractérisé par le fait que le cylindre doseur (2) prévu au minimum pour la matière supplémentaire est relié au châssis (4) au moyen d'un accouplement rapide.

6. Appareil de dosage selon la revendication 2, caractérisé par le fait que la valve à deux voies considérée est réalisée sous la forme d'une noix rotative (36, 43) dont l'étanchéité est assurée, par rapport à la paroi interne (19, 27) du cylindre doseur considéré (1, 2), du côté du raccord d'admission (32, 44) et du raccord de sortie (33, 45) tourné à l'opposé du piston doseur respectif (17, 22).

7. Appareil de dosage selon la revendication 6, caractérisé par le fait que la noix rotative (36, 43) prend appui par sa face frontale sur un disque de glissement (38, 48).

8. Appareil de dosage selon les revendications 2 et 6, caractérisé par le fait qu'au moins la noix rotative (43) du cylindre doseur (2) prévu au minimum pour la matière supplémentaire est reliée à un entraînement en rotation (65) au moyen d'un accouplement dissociable, en particulier d'un accouplement emboîtable (70).

9. Appareil de dosage selon la revendication 3, caractérisé par le fait que l'entraînement commun est formé par un vérin hydraulique (7).

# FIG.1

# FIG. 2

0 133 292

**FIG. 3**